Europäisches Patentamt

European Patent Office

Office européen des brevets

(11) Veröffentlichungsnummer : **0 110 125**
**B1**

(12) **EUROPÄISCHE PATENTSCHRIFT**

(45) Veröffentlichungstag der Patentschrift :
06.05.87

(21) Anmeldenummer : 83110664.6

(22) Anmeldetag : 26.10.83

(51) Int. Cl.⁴ : **A 24 C   5/34**, A 24 C   5/345,
B 65 B 19/30, G 01 N 21/88,
G 01 N 21/89, G 01 N 21/49

(54) **Vorrichtung zur Fehler-Prüfung von Zigaretten oder dergleichen.**

(30) Priorität : 23.11.82 DE 3243204

(43) Veröffentlichungstag der Anmeldung :
13.06.84 Patentblatt 84/24

(45) Bekanntmachung des Hinweises auf die Patenterteilung : 06.05.87 Patentblatt 87/19

(84) Benannte Vertragsstaaten :
DE FR GB IT NL SE

(56) Entgegenhaltungen :
DD-A-   142 648
DE-A- 2 411 231
DE-A- 2 653 298
DE-A- 2 732 520
DE-A- 3 201 666
DE-B- 1 213 340
GB-A- 1 347 221

(73) Patentinhaber : Focke & Co. (GmbH & Co.)
Siemensstrasse 10
D-2810 Verden (DE)

(72) Erfinder : Focke, Heinz
Moorstrasse 64
D-2810 Verden (DE)
Erfinder : Liedtke, Kurt
Trift 18
D-2810 Verden (DE)

(74) Vertreter : Bolte, Erich, Dipl.-Ing. et al
c/o Meissner & Bolte Patentanwälte Hollerallee 73
D-2800 Bremen (DE)

**Beschreibung**

Die Erfindung betrifft eine Vorrichtung zur Fehler-Prüfung von Zigaretten oder dgl. hinsichtlich Vorhandensein von ausreichendem Tabak, Zigarettenfilter etc. durch auf die Zigarette gerichtetes, von einem Lichtsender abgegebenes Licht, das von einem lichtempfindlichen Empfänger aufgenommen wird, wobei Sender und Empfänger unter einem rechten Winkel zueinander gerichtet sind.

Eine derartige Vorrichtung ist aus der DE-A-2 653 298 bekannt. Bei dieser Vorrichtung werden zu prüfende Zigaretten einzeln an den entsprechenden Lichtsender-/Lichtempfängeranordnungen vorbeigeführt.

Der Gegenstand der vorgenannten Druckschrift wird auch in der DD-A-211 895, welche ebenfalls eine Zigaretten-Prüfvorrichtung zum Gegenstand hat, beschrieben. In dieser Druckschrift wird klar ausgesagt, daß mit der Vorrichtung gemäß DE-A-2 653 298 die Prüfung von mehreren Zigaretten gleichzeitig nicht möglich ist. Da aber bei den heute üblichen hohen Produktionsgeschwindigkeiten die Einzelprüfung von Zigaretten aus verfahrensökonomischen Gründen nicht durchführbar ist, gibt die vorgenannte DD-A-211 895 einen anderen, jedoch sehr komplizierten und wenig betriebssicheren Weg der Zigaretten-Prüfung an.

Ausgehend vom oben genannten Stand der Technik ist es Aufgabe der vorliegenden Erfindung entgegen dem in der DD-A-211 895 geäußerten Vorurteil eine Vorrichtung nach der DE-A-2 653 298 dahingehend weiterzubilden, daß mehrere Zigaretten gleichzeitig prüfbar sind.

Die Aufgabe wird dadurch gelöst, daß mindestens jeder Lage einer aus mehreren Lagen bestehenden Zigaretten-Gruppe ein Empfänger zugeordnet ist und daß die Lichtsender und die Empfänger derart in Axialrichtung der Zigaretten versetzt zueinander angeordnet sind, daß gleichzeitig mindestens eine Zigarette in jeder Lage einer Zigaretten-Gruppe, bestehend aus mehreren, gegeneinander entsprechend der Lichtsender-/Empfängeranordnung versetzten Lagen prüfbar ist.

Es werden somit bei Zigaretten-Gruppen, die z. B. aus drei Lagen bestehen, mindestens jeweils drei Zigaretten gleichzeitig geprüft. Sieht man für jede Zigarette einer ganzen Gruppe einen einzelnen Lichtempfänger (mit zugehörigem Sender) vor, so kann die ganze Zigaretten-Gruppe gleichzeitig geprüft werden. Entgegen der in der DE-A-211 895 geäußerten Auffassung ist dies durch den Axialversatz der Zigaretten möglich, wobei überraschenderweise keine Störeinflüsse der Sender-/Empfängerpaare aufeinander feststellbar sind.

Weitere bevorzugte Ausführungsformen der Erfindung ergeben sich aus den Unteransprüchen.

Die Prüfung der Zigaretten kann mit sichtbarem, insbesondere diffusem Licht durchgeführt werden, welches von individuellen Lampen (Glühlampen) oder von einer gemeinsamen Lichtquelle erzeugt wird. Alternativ ist Infrarotlicht geeignet, welches für kurze Taktzeiten und damit für extrem kurze Prüfungen geeignet ist.

Die Zigaretten-Gruppen werden in der der Zigaretten-Packung entsprechenden Formation in Taschen eines Förderers einer Prüfstation zugeführt. In dieser wird während einer kurzen Stillstandsphase oder vorteilhafterweise während der Förderbewegung der Zigaretten-Gruppe die Prüfung durchgeführt.

Weitere Merkmale der Erfindung ergeben sich aus den nachfolgenden Ausführungsbeispielen, die anhand von Zeichnungen näher erläutert sind. Es zeigen:

Figur 1 eine schematische Darstellung des an sich bekannten Prüfvorganges bei einer einzelnen fehlerhaften Zigarette, in Seitenansicht bzw. im Vertikalschnitt,

Figur 2 eine Darstellung entsprechend Fig. 1, jedoch bei der Prüfung einer ordnungsgemäß gefüllten Zigarette,

Figur 3 eine Ausführungsform der erfindungsgemäßen Prüfvorrichtung (Prüfkopf) im Vertikalschnitt,

Figur 4 einen Horizontalschnitt IV-IV der Prüfvorrichtung gemäß Fig. 3,

Figur 5 eine Ansicht V der Prüfvorrichtung gemäß Fig. 3

Figur 6 eine Darstellung entsprechend Fig. 3 für eine andere Ausführungsform des Prüfkopfes,

Figur 7 eine weitere Ausführungsform eines Prüfkopfes im Horizontalschnitt,

Figur 8 einen Teil einer Verpackungsmaschine (Revolver) mit einem Prüfkopf,

Figur 9 einen Teil einer Taschenkette als Förderer für Zigaretten-Gruppen und mit einem Prüfkopf in schematischer Darstellung,

Figur 10 eine Alternativausführung eines Prüfkopfes für die Anwendung im Zusammenhang mit einer Taschenkette, ebenfalls in schematischer Seitenansicht.

Die in den Zeichnungen dargestellten Anwendungs- und Ausführungsbeispiele beziehen sich auf die Prüfung von Zigaretten 20 (sogenannte Kopfkontrolle) vor der Verpackung derselben.

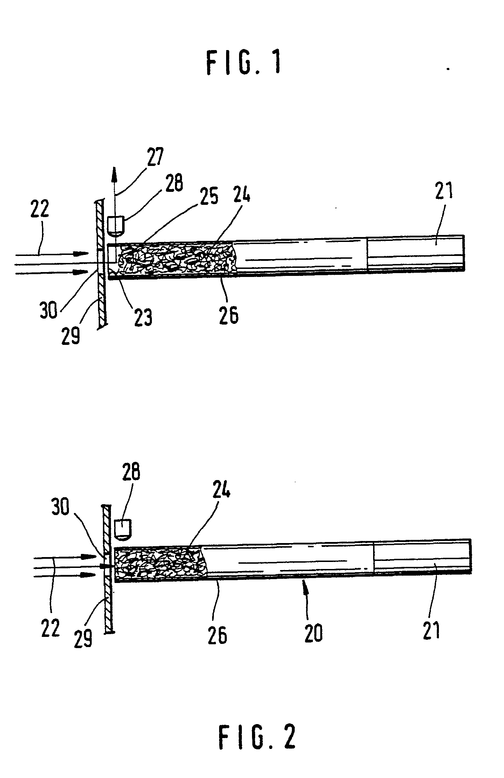

In Fig. 1 und 2 ist die Prüfung der Zigaretten 10 schematisch anhand einer fehlerhaften Zigarette (Fig. 1) sowie anhand einer ordnungsgemäß ausgebildeten Zigarette (Fig. 2) dargestellt. Es handelt sich dabei um Zigaretten mit einem Filter 21. Die Prüfung findet im Bereich des zum Filter 21 gegenüberliegenden Endes der Zigaretten 20 statt. Zu diesem Zweck werden bei dem gezeigten Ausführungsbeispiel Lichtstrahlen 22 über eine Endfläche 23 in Längsrichtung, also in Axialrichtung, in die Zigarette 20 eingeleitet. Bei der Zigarette 20 gemäß Fig. 1 ist in einem Bereich benachbart zur Endfläche 23 eine unvollständige Tabakfüllung 24 vorhanden, nämlich mit einer tabakfreien Lunkerstelle 25. Die in die Zigarette 20 eintretenden Lichtstrahlen 22 erzeugen durch teilweise Ablenkung zur Seite Licht im Bereich eines Zigarettenmantels, nämlich im Zigarettenpapier 26. Ablenkstrahlen 27 treten durch das Zigarettenpapier 26 hindurch und können hier infolge des fehlenden Tabaks durch einen geeigneten Empfänger 28, insbesondere eine Photodiode, aufgenommen werden.

Bei der ordnungsgemäßen mit Tabak gefüllten Zigarette 20 der Fig. 2 findet eine Querablenkung von Licht nicht statt. Dieses wird vielmeh im Bereich der Endfläche 23 reflektiert bzw. absorbiert.

Das vom Empfänger 28 aufgenommene Lichtsignal wird in einer maschinentechnisch angemessenen Weise ausgewertet und zwar derart, daß die Zigarette aus dem Verpackungsablauf ausgesondert wird.

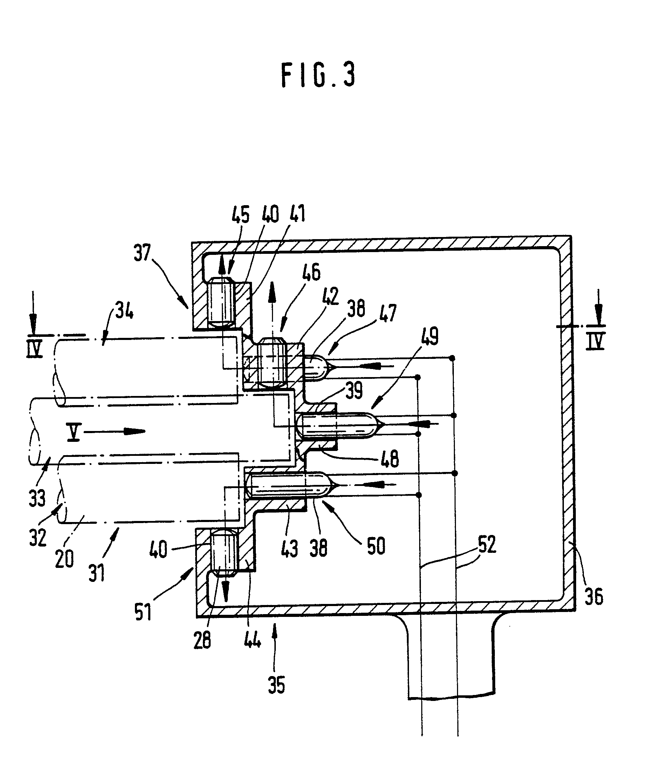

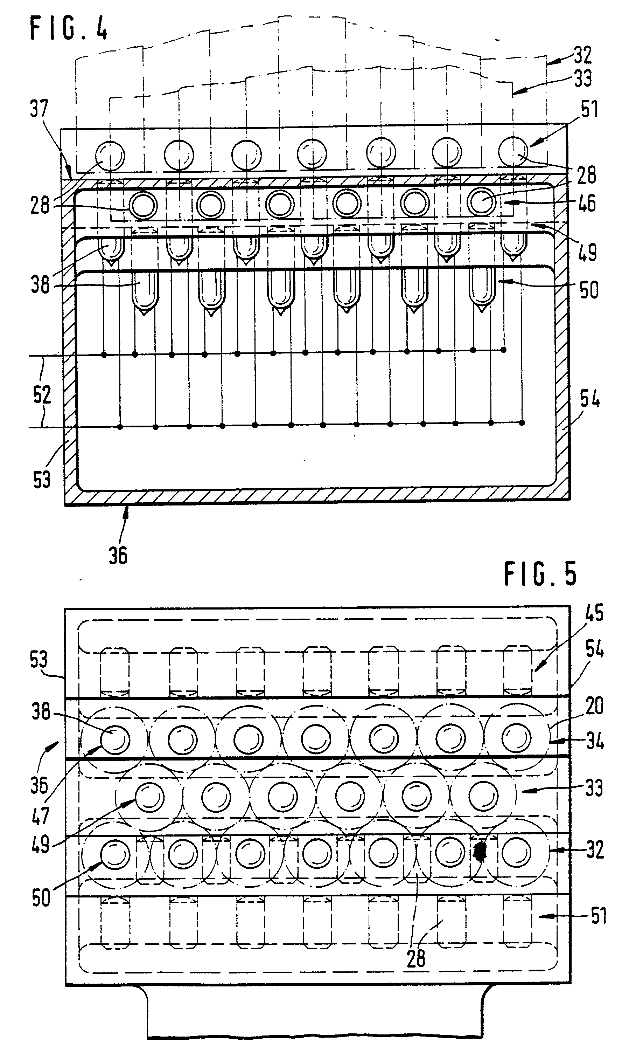

Bei der hier gezeigten bevorzugten Ausführungsform der Erfindung, die nachfolgend anhand der Fig. 3 bis 10 näher erläutert wird, werden (in den Fig. 1 und 2 angedeutet) den Endflächen 23 der Zigareten 20 Blenden 29 vorgeordnet, die eine Blendenöffnung 30 aufweisen, die auf die Endfläche 23 zentriet ist und einen kleineren Durchmesser aufweist als diese. Gemäß der Erfindung, deren Ausführungsbeispiel im folgenden anhand der Abbildungen 3-10 näher beschrieben wird, führt man die Prüfung der Zigaretten 20 an ganzen Zigaretten-Gruppen 31 durch. Diese bestehen aus einer den fertigen Zigaretten-Packungen entsprechenden Anzahl von Zigaretten 20 bei entsprechender Anordnung in mehreren, beispielsweise drei Lagen 32, 33, 34. Bei den hier gezeigten, vielfach üblichen Formationen bestehen die äußeren Lagen 32 und 34 aus sieben und die mittlere Lage aus sechs Zigaretten. Letztere sind gegenüber den Zigaretten der äußeren Lagen 32 und 34 in « Sattellage » gelegt.

Zur (gleichzeitigen) Prüfung der Zigaretten 20 einer so ausgebildeten Zigaretten-Gruppe 31 dient ein Prüfkopf 35, der aus einem geschlossenen Gehäuse 36 besteht. In einer den zu prüfenden Zigaretten 20 zugekehrten Vorderwand 37 des Gehäuses 36 sind die notwendigen Organe für die Prüfung der Zigaretten 20 untergebracht. Innerhalb des Gehäuses 36 befinden sich elektrische bzw. elektronische Einrichtungen.

Bei dem Ausführungsbeispiel der Fig. 3 bis 5 ist jeder zu prüfenden Zigarette 20 ein gesonderter Empfänger 28 zugeordnet, der, wie beschrieben, queraxial orientiert ist. Des weiteren ist jeder Zigarette 20 eine gesonderte Lichtquelle in Gestalt einer kleinen elektrischen Lampe 38 zugeordnet. Die beispielsweise als handelsübliche Signallampen ausgebildeten Lampen 38 sind in Haltebohrungen 39 der Vorderwand 37 des Gehäuses passend gelagert. Gleichermaßen sind die (zylindrischen) Empfänger 28 in quergerichteten Haltebohrungen 40 der Vorderwand 37 gelagert.

Für die Prüfung der Zigaretten 20 einer aus mehr als zwei Lagen bestehenden Zigaretten-Gruppe 31 werden die Lagen gegeneinander versetzt. Bei dem vorliegenden Ausführungsbeispiel ist die mittlere Lage 33 gegenüber den äußeren Lagen 32 und 34 stufenartig in Richtung auf den Prüfkopf 35 versetzt. Dadurch liegen die Endbereiche der Zigaretten 20 der mittleren Lage 33 ebenfalls frei, so daß die zugeordneten Empfänger 28 benachbart zu den Enden dieser Zigaretten angeordnet werden können.

Die Vorderwand 37 des Gehäuses 36 ist entsprechend der versetzten Anordnung der Endbereiche der Zigaretten 20 passend hierzu stufenförmig ausgebildet. Die dadurch entstehenden Wandungsstufen 41, 42, 43 und 44 dienen zur Aufnahme von Sender (Lampe 38) und/oder Empfänger 28, wobei die Wandungsstufen 41, ... 44 jeweils im Bereich der Aufnahme des einen oder anderen Organs entsprechend stärker bemessen sind als der übrige Teil des Gehäuses 36.

Im einzelnen dient eine obere Wandungsstufe 41 zur Aufnahme der (vertikal gerichteten) Empfänger 28 einer Empfängerreihe für die obere Lage 34. Die nächstfolgende, nach innen zurückgesetzte Wandungsstufe 42 dient sowohl zur Aufnahme einer weiteren Empfängerreihe 46 also auch zur Aufnahme einer Lampenreihe 47. Empfänger 28 und Lampen 38 sind im Bereich dieser Wandungsstufe 42 in nebeneinanderliegenden Haltebohrungen 39 und 40 gelagert, die um 90° zueinander versetzte Längsachsen aufweisen.

Im Bereich der mittleren Lage 33 ist innenseitig an der Vorderwand 37 ein rippenartiger Ansatz 48 angeformt, der zur Lagerung einer Lampenreihe 49 in entsprechenden Haltebohrungen 39 dient. Die nachfolgenden Wandungsstufen 43 und 44 dienen zur Aufnahme einer weiteren Lampenreihe 50 bzw. einer Empfängerreihe 51. Die Empfänger 28 der unteren Empfängerreihe 51 wirken demnach in entgegengesetzter Richtung (nach unten) zu den Empfängern der oberen Empfängerreihe 40.

Die Lampen 38 werden bei dieser Ausführungsform über Stromleitungen 52 in Parallelschaltung gespeist.

Die durch die Wandungsstufen 41 ... 44 gebildeten Absätze in der Vorderwand 37 des Gehäuses 36 sind an den Seiten offen, so daß über die volle Länge bzw. Breite des Gehäuses 36 eine durchgehende abgestufte Vertiefung gebildet ist, die sich auch im Bereich von Seitenwänden 53, 54 des Gehäuses fortsetzt.

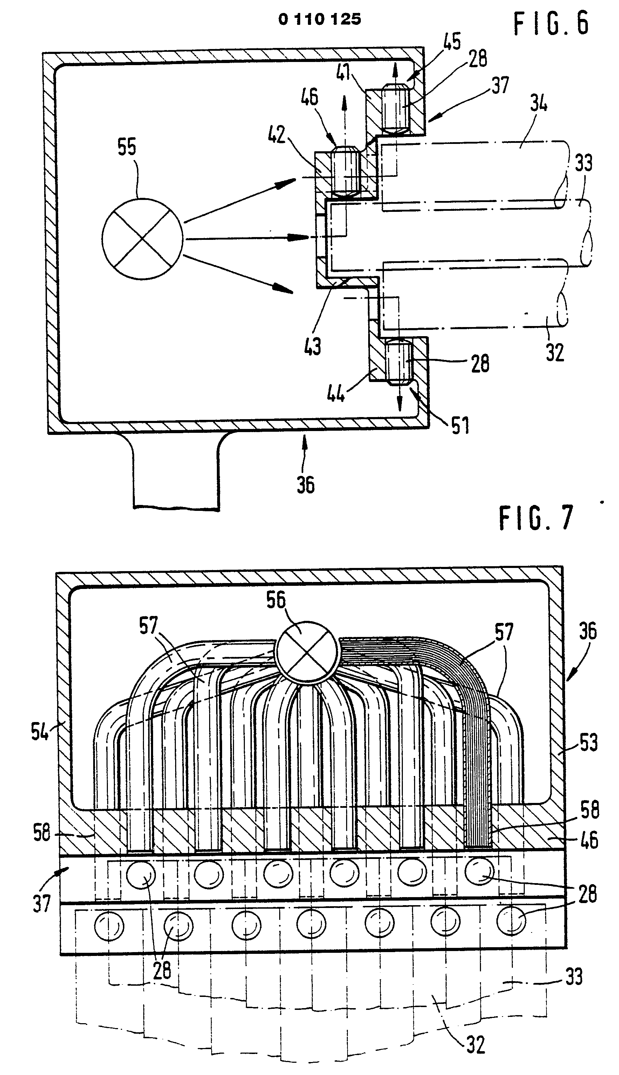

Die Ausführungsform gemäß Fig. 6 unterscheidet sich von der vorstehend beschriebenen dadurch, daß hier innerhalb des Gehäuses 36 eine gemeinsame Lichtquelle angeordnet ist in Gestalt einer Zentrallampe 55. Das von dieser erzeugte (diffuse) Licht wird über Blendenöffnungen 30 in der Vorderwand 37 den Endflächen 23 der Zigaretten 20 zugeleitet. Die Vorderwand 37 des Gehäuses 36 ist auch hier analog zu dem Ausführungsbeispiel der Fig. 3 bis 5 stufenartig ausgebildet mit Wandungsstufen 41 ... 44 entsprechenden Aufbaus und entsprechender Funktion. Es fehlen allerdings die Aufnahmen für die gesonderten Lampen 38.

Ein in bezug auf die Lichtquelle und Lichtführung besonderes Ausführungsbeispiel ist in Fig. 7 in einem Horizontalschnitt durch das Gehäuse 36 im Bereich des kleinsten Querschnitts dargestellt.

Von einer Zentrallampe 56 ausgehendes Licht wird über gesonderte Lichtleitungen 57, insbesondere Glasfaserkabel, jeder einzelnen Zigarette 20 bzw. jeder Endfläche 23 derselben zugeführt. Die Lichtleitungen 57 werden je nach den Erfordernissen bogenförmig umgelenkt. Der Umlenkungswinkel ist nicht größer als 90°. Die im Bereich der Zentrallampe 56 beginnenden Lichtleitungen 57 enden in Leitungsbohrungen 58 der Vorderwand 37, und zwar im Bereich der Wandungsstufen 41 ... 44. Die Leitungsbohrungen 58 entsprechen im Durchmesser dem Außendurchmesser der Lichtleitungen 57. Diese schließen bündig mit der Außenfläche der jeweiligen Wandungsstufe 41 .... 44 ab. In bezug auf die Anordnung der Empfänger 28 in einzelnen Empfängerreihen 45, 46 und 51 entspricht diese Ausführungsform den beschriebenen.

Anstelle von sichtbares Licht aussendenden Lichtquellen sind auch andere Ausführungen vorteilhaft, insbesondere unter Verwendung von Infrarotlicht, wobei letzteres für kurze Arbeitstakte besonders vorteilhaft ist.

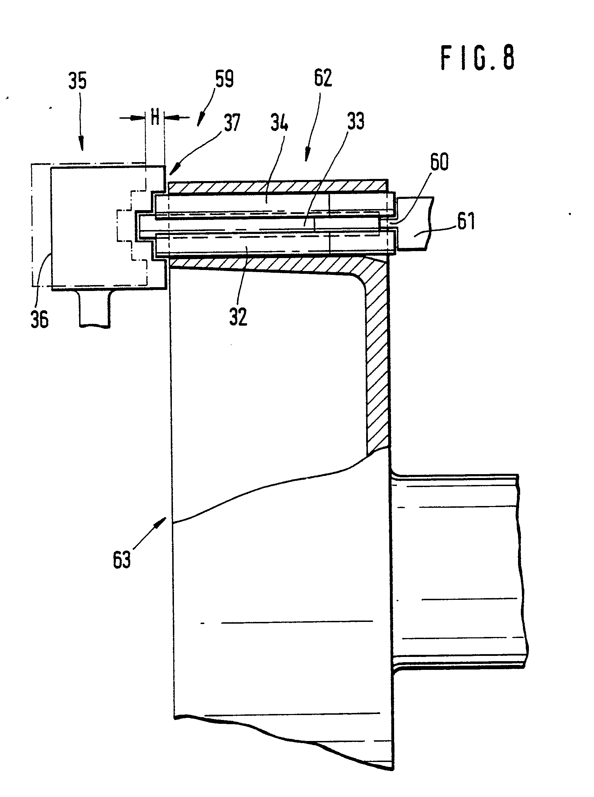

Die Zigaretten 20 bzw. Zigaretten-Gruppen 31 werden zweckmäßigerweise durch einen Förderer nacheinander einer Prüfstation 59 zugeführt. In dieser ist die Prüfeinrichtung, nämlich der Prüfkopf 35, ortsfest angebracht, derart, daß für die Durchführung der Prüfung der Prüfkopf 35 über einen kurzen Hub der jeweils zu prüfenden Zigaretten-Gruppe 31 zugestellt werden kann (Fig. 8). Im Bereich dieser Prüfstation 59 wird außerdem zeitweilig die Relativstellung der Zigaretten 20 innerhalb der Zigarettengruppe 31 durch Versatz der Lagen 32, 33 und 34 hergestellt. Bei dem Ausführungsbeispiel der Fig. 8 ist hierfür ein stufenförmiger, nämlich mit einem Vorsprung 60 ausgebildeter Stößel 61 vorgesehen, der auf der zum Prüfkopf 35 gegenüberliegenden Seite der Zigaretten 20 (an den Filter 21) zur Anlage gebracht wird und dadurch die zunächst ausgerichteten Zigaretten 20 in der beschriebenen Weise gegeneinander verschiebt. In einer der Prüfstation 59 folgenden Station kann die ursprüngliche, ausgerichtete Relativlage der Zigaretten 20 wieder hergestellt werden, am besten durch einen auf der Seite des Prüfkopfes 35 wirksamen Gegenschieber (nicht dargestellt).

Die Zigaretten-Gruppe 31 findet Aufnahme in einzelnen Taschen 62 eines vorzugsweise endlosen Förderers. Bei dem Ausführungsbeispiel der Fig. 8 sind diese Taschen 62 am Außenumfang eines drehenden Revolvers 63 angeordnet.

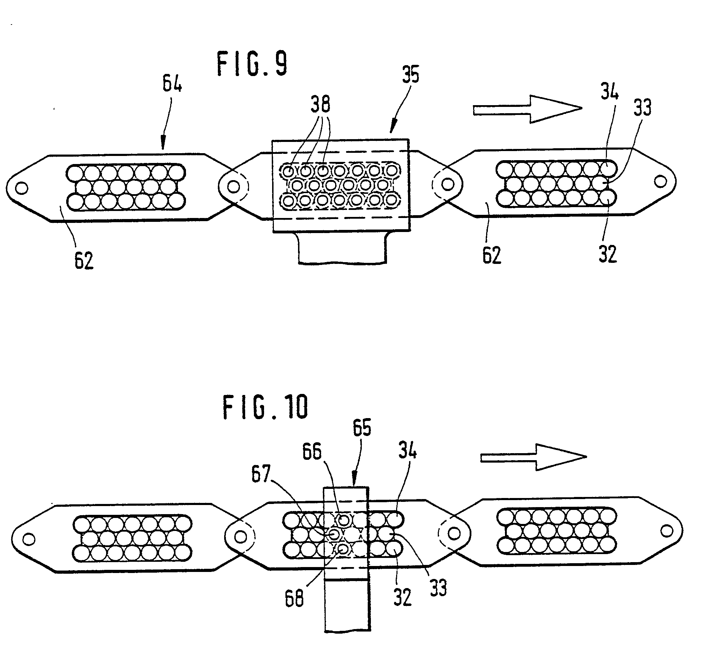

Eine Alternative hierzu ist in Fig. 9 dargestellt. Die Taschen 62 sind hier Glieder einer Taschenkette 64 als Förderer. Die Taschenkette ist in bekannter Weise so ausgebildet, daß die Zigarettengruppe 31 unter Berücksichtigung der besonderen Formation formschlüssig in der Tasche 62 Aufnahme findet.

Der Prüfkopf 35 ist hier seitlich neben der Bewegungsbahn der Taschenkette 64 angeordnet und kann der jeweils zu prüfenden Zigaretten-Gruppe 31 über einen Seitenhub zugestellt werden. Der Prüfkopf 35 ist hier im Sinne des einen oder anderen beschriebenen Ausführungsbeispiels ausgebildet. Die Prüfung der Zigaretten 20 kann während eines momentanen, kurzzeitigen Stillstands der Taschenkette erfolgen, alternativ aber auch bei fortgesetzter (gleichförmiger) Bewegung. Im letztgenannten Falle ist der feststehende Prüfkopf 35 kurzzeitig sensibilisiert, derart, daß bei momentaner Gleichstellung der Zigaretten 20 der Zigaretten-Gruppe 31 mit den Prüforganen (Lampen ...) des Prüfkopfes das Lichtsignal, vorzugsweise Infrarotlicht, ausgegeben wird.

Bei der Ausführungsform gemäß Fig. 10 wird ein besonderer Prüfkopf 65 eingesetzt, der lediglich eine der Anzahl der Lagen 32, 33, 34 entsprechende Anzahl von Zigarettenprüforganen aufweist. Es kann sich dabei im einzelnen um die im Zusammenhang mit Fig. 3 bis 7 beschriebenen Prüforgane handeln. Der Prüfkopf 65 kann ebenso mit einer stufenartigen Vorderwand ausgebildet sein. Drei Sender 66, 67, 68 (und entsprechende Empfänger) sind in Höhe der Lagen 32, 33, 34 angeordnet, und zwar in Förderrichtung versetzt zueinander, so daß gleichzeitig jeweils ein Sender 66, 67, 68 einer Zigarette der drei Lagen 32, 33, 34 gegenübersteht. Die Zigaretten der einzelnen Lagen werden hier demnach aufeinanderfolgend geprüft. Dieses Prüfungsverfahren erfolgt zweckmäßigerweise während fortlaufender Bewegung der Taschenkette 64, wobei die Sender 66 ... 68 kurzzeitig und synchron mit der Bewegung der Zigarettengruppe 31 beaufschlagt werden, so daß nacheinander alle Zigaretten optisch abgetastet sind.

## Patentansprüche

1. Vorrichtung zur Fehler-Prüfung von Zigaretten oder dgl. hinsichtlich Vorhandensein von (ausreichendem) Tabak (24), Zigarettenfilter (21) etc. durch auf die Zigarette gerichtetes, von einem Lichtsender (38, 55, 56, 66-68) abgegebenes Licht, das von einem Lichtempfindlichen Empfänger (28) aufgenommen wird, wobei Sender und Empfänger unter einem rechten Winkel zueinander gerichtet sind, dadurch gekennzeichnet, daß mindestens jeder Lage (32, 33, 34) einer aus mehreren Lagen bestehenden Zigaretten-Gruppe (31) ein Empfänger (28) zugeordnet ist, und daß die Lichtsender (38, 55, 56, 66-68) und die Empfänger (28) derart in Achsrichtung der Zigaretten zueinander versetzt angeordnet sind, daß gleichzeitig mindestens eine Zigarette (20) in jeder Lage einer Zigarettengruppe (31), bestehend aus mehreren, gegeneinander entsprechend der Lichtsender-/Empfängeranordnung versetzten Lagen (32-34) prüfbar ist.

2. Vorrichtung nach Anspruch 1, dadurch gekennzeichnet, daß die Lichtsender-/Empfängeranordnung derart getroffen ist, daß eine mittlere Lage (33) gegenüber den unteren und oberen Lagen (32, 34) herausragt.

3. Vorrichtung nach einem der vorhergehenden Ansprüche, dadurch gekennzeichnet, daß zwischen Lichtquelle und der Endfläche (23) der Zigarette eine Blende (29) angeordnet ist, deren Blendenöffnung (30) kleiner ist als die Endfläche (23) der Zigarette.

4. Vorrichtung nach einem der vorhergehenden Ansprüche, dadurch gekennzeichnet, daß jeder Zigarette (20) einer Zigaretten-Gruppe (31) eine gesonderte Lichtquelle (38) zuordenbar ist.

5. Vorrichtung nach einem der vorhergehenden Ansprüche, dadurch gekennzeichnet, daß Sender und Empfänger in einem gemeinsamen Halter, insbesonder in Wandungen eines Gehäuses (36) gelagert sind.

6. Vorrichtung nach einem der vorhergehenden Ansprüche, dadurch gekennzeichnet, daß jeweils ein Empfänger bzw. eine Empfängerreihe (45, 51) oberhalb und unterhalb der Zigarettengruppe (31) anordenbar ist.

7. Vorrichtung nach einem der Ansprüche 5 oder 6, dadurch gekennzeichnet, daß eine Wandung des Gehäuses (36), insbesondere eine Vorderwand (37), stufenförmig gestaltet ist unter Bildung von gegeneinander versetzten Wandungsstufen (41-44).

8. Vorrichtung nach Anspruch 7, dadurch gekennzeichnet, daß die Empfänger (28) und ggf. eine Mehrzahl von Sendern in Haltebohrungen (39, 40) der Wandungsstufen (41-44) des Gehäuses (36) gelagert sind.

9. Vorrichtung nach einem der Ansprüche 4-8, dadurch gekennzeichnet, daß die den Zigaretten (20) zugekehrte Vorderwand (37) des Gehäuses (36) Blendenöffnungen (39) aufweist, insbesondere bei einer für alle Empfänger gemeinsamen Lichtquelle, z. B. eines Zentrallampe (55).

10. Vorrichtung nach einem der vorhergehenden Ansprüche, dadurch gekennzeichnet, daß eine gemeinsame Lichtquelle (Zentrallampe 56) durch Lichtleiter, insbesondere Glasfaserleitungen, mit jeder Zigarette (20) bzw. deren Endfläche (23) verbindbar ist, wobei die Lichtleiter benachbart zu den Endflächen (23) und vorzugsweise bündig mit der Vorderwand (37) des Gehäuses (36) enden.

11. Vorrichtung nach einem der Ansprüche 5-10, dadurch gekennzeichnet, daß der gemeinsame Halter (Prüfkopf 35) durch Hubbewegungen der Zigaretten-Gruppe (31) zu deren Prüfung zustellbar ist.

12. Vorrichtung nach einem der Ansprüche 5-11, dadurch gekennzeichnet, daß die Zigaretten-Gruppen (31) in Taschen (62) eines Förderers, insbesondere eines Revolvers (63) bzw. einer Taschenkette (64) dem ortsfesten Prüfkopf (35) im Bereich einer Prüfstation (59) zuführbar sind.

13. Vorrichtung nach Anspruch 12, dadurch gekennzeichnet, daß die Zigaretten (20) der Zigaretten-Gruppe (31) im Bereich der Prüfstation (59) durch ein Schiebeorgan, insbesondere durch einen stufenförmig ausgebildeten Stößel (61), in eine Formation mit stufenförmiger Relativstellung der Lagen (32, 33, 34) verschiebbar sind.

14. Vorrichtung nach einem der vorhergehenden Ansprüche, dadurch gekennzeichnet, daß Mittel vorgesehen sind, um die Zigaretten (20) über den Förderer anzuhalten und zu prüfen oder bei fortlaufender Bewegung durch kurzzeitige Beaufschlagung der Sender zu prüfen.

15. Vorrichtung nach einem der vorhergehenden Ansprüche, dadurch gekennzeichnet, daß jeder Lage (32, 33, 34) einer Zigaretten-Gruppe (31) ein Empfänger (28) oder Sender (66, 67, 68) mit seitlichem Versatz entsprechend der Relativlage der Zigaretten in den Lagen (32, 33, 34) zugeordenbar ist, wobei die Zigaretten in jeder Lage während Relativbewegung zu den Sendern bzw. Empfängern durch kurzzeitige Beaufschlagung derselben prüfbar sind.

16. Vorrichtung nach einem der vorhergehenden Ansprüche, dadurch gekennzeichnet, daß Lichtsender (38, 55, 56, 66-68) und Empfänger (28) derart angeordnet sind, daß das Licht axial in die Zigarette (20) eintritt.

## Claims

1. Apparatus for checking for defects in cigarettes or the like, as regards the presence of (sufficient) tobacco (24), cigarette filters (21) etc., by light directed towards the cigarette and emitted by a light emitter (38, 55, 56, 66-68), which is picked up by a light-sensitive receiver (28), in which case the emitter and receiver are arranged at right angles with respect to each other, characterised in that a receiver (28) is associated with at least each position (32, 33, 34) of a cigarette group (31) consisting of several layers and that the light emitters (38, 55, 56, 66-68) and the receivers (28) are staggered with respect to each other in the axial direction of the cigarettes so that simultaneously at least one cigarette (20) in each layer of a cigarette group (31), consisting of several layers (32-34) staggered with respect to each other in accordance with the arrangement of light emitters and receivers can be checked.

2. Apparatus according to Claim 1, characterised in that the light emitter/receiver arrangement is such that a middle layer (33) projects with respect to the lower and upper layers (32, 34).

3. Apparatus according to one of the preceding Claims, characterised in that located between the light source and the end surface (23) of the cigarette is a diaphragm (29), whereof the aperture (30) is smaller than the end surface (23) of the cigarette.

4. Apparatus according to one of the preceding Claims, characterised in that a separate light source (38) can be associated with each cigarette (20) of a cigarette group (31).

5. Apparatus according to one of the preceding Claims, characterised in that emitters and receivers are mounted in a common holder, in particular in the walls of a housing (36).

6. Apparatus according to one of the preceding Claims, characterised in that a receiver or a row of receivers (45, 51) may respectively be located above and below the cigarette group (31).

7. Apparatus according to one of Claims 5 or 6, characterised in that a wall of the housing (36), in particular a front wall (37), is constructed in a stepped manner thus forming steps (41-44) of the wall which are staggered with respect to each other.

8. Apparatus according to Claim 7, characterised in that the receivers (28) and possibly a plurality of emitters are mounted in retaining bores (39, 40) in the stepped walls (41-44) of the housing (36).

9. Apparatus according to one of Claims 4 to 8, characterised in that the front wall (37) of the housing (36) facing the cigarettes (20) comprises apertures (39), in particular in the case of a light source common to all receivers, for example a central lamp (55).

10. Apparatus according to one of the preceding Claims, characterised in that a common light source (central lamp 56) can be connected by light conductors, in particular fibre glass lines to each cigarette (20) or its end surface (23), in which case the light conductors terminate adjacent to the end surfaces (23) and preferably flush with the front wall (37) of the housing (36).

11. Apparatus according to one of Claims 5 to 10, characterised in that the common holder (checking head 35) can be fed by stroke movements of the cigarette group (31) for their checking.

12. Apparatus according to one of Claims 5 to 11, characterised in that the cigarette groups (31) can be supplied in the compartment (62) of a conveyor, in particular of a turret (63) or a compartment chain (64) to the stationary checking head (35) in the region of a checking station (59).

13. Apparatus according to Claim 12, characterised in that in the region of the checking station (59), the cigarettes (20) of the cigarette group (31) can be displaced by a sliding member, in particular by a ram (61) constructed in a stepped manner, into a formation with a stepped relative position of the layers (32, 33, 34).

14. Apparatus according to one of the preceding Claims, characterised in that means are provided for stopping and checking the cigarettes (20) by way of the conveyor or in the case of continuous movement, for checking by briefly actuating the emitters.

15. Apparatus according to one of the preceding Claims, characterised in that a receiver (28) or emitter (66, 67, 68) can be associated with each position (32, 33, 34) with a lateral stagger according to the relative position of the cigarettes in the layers (32, 33, 34), in which case the cigarettes in each layer can be checked during relative movement with respect to the emitters or receivers due to brief actuation thereof.

16. Apparatus according to one of the preceding Claims, characterised in that light emitters (38, 55, 56, 66-68) and receivers (28) are arranged so that the light enters the cigarette (20) axially.

**Revendications**

1. Dispositif de contrôle des défauts de cigarettes ou analogues, relativement à la présence de tabac (suffisante) (24), de filtre de cigarette (21) etc., par de la lumière, provenant d'un émetteur de lumière (38, 55, 56, 66-68), dirigée sur la cigarette et reçue par un récepteur (28) sensible à la lumière, émetteur et récepteur étant orientés à angle droit l'un par rapport à l'autre, caractérisé par le fait qu'un récepteur (28) est associé au moins à chaque couche (32, 33, 34) d'un groupe de cigarettes (31) constitué de plusieurs couches et que les émetteurs de lumière (38, 55, 56, 66-68) et les récepteurs (28) sont disposés, décalés les uns par rapport aux autres en direction axiale des cigarettes de telle sorte que puisse être soumise à détection, simultanément, au moins une cigarette (20) dans chaque couche d'un groupe de cigarettes (31) constitué de plusieurs couches (32-34) décalées les unes par rapport aux autres selon la disposition, émetteurs de lumière/récepteurs.

2. Dispositif selon la revendication 1, caractérisé par le fait que la disposition, émetteur de lumière/récepteur, est déterminée de manière qu'une couche médiane (33) fasse saillie par rapport aux couches inférieure et supérieure (32, 34).

3. Dispositif selon l'une des revendications précédentes, caractérisé par le fait qu'entre les sources lumineuses et la surface d'extrémité (23) de la cigarette, est disposé un diaphragme (29) dont l'ouverture (30) est plus petite que la surface d'extrémité (23) de la cigarette.

4. Dispositif selon l'une des revendications précédentes, caractérisé par le fait qu'à chaque cigarette (20) d'un groupe de cigarettes (31) est associable une source lumineuse (38) particulière.

5. Dispositif selon l'une des revendications précédentes, caractérisé par le fait qu'émetteurs et récepteurs sont montés dans un support commun, en particulier dans les parois d'un boîtier (36).

6. Dispositif selon l'une des revendications précédentes, caractérisé par le fait qu'un récepteur, ou une rangée de récepteurs (45, 51), peut être disposé, respectivement, au-dessus et en dessous du groupe de cigarettes (31).

7. Dispositif selon l'une des revendications 5 ou 6, caractérisé par le fait qu'une paroi du boîtier (36), en particulier une paroi avant (37), est étagée en formant des gradins de paroi (41-44) décalés les uns par rapport aux autres.

8. Dispositif selon la revendication 7, caractérisé par le fait que les récepteurs (28) et éventuellement une pluralité d'émetteurs sont montés dans des alésages de retenue (39, 40) des gradins de paroi (41-44) du boîtier (36).

9. Dispositif selon l'une des revendications 4-8, caractérisé par le fait que la paroi avant (37) du boîtier (36), qui fait face aux cigarettes (20), présente des ouvertures de diaphragme (39), en particulier pour une source lumineuse commune à tous les émetteurs, par exemple une lampe centrale (55).

10. Dispositif selon l'une des revendications précédentes, caractérisé par le fait qu'une source lumineuse commune (lampe centrale 56) est relia- ble à chaque cigarette (20) ou à leur surface d'extrémité (23), par des conducteurs de lumière, en particulier des fibres de verre, les conducteurs se terminant au voisinage des surfaces d'extrémité (23) et, avantageusement, affleurant la paroi avant (37) du boîtier (36).

11. Dispositif selon les revendications 5-10, caractérisé par le fait que le support commun (tête de contrôle 35) peut êre placé pour le contrôle par mouvement de levée du groupe de cigarettes (31).

12. Dispositif selon l'une des revendications 5 à 11, caractérisé par le fait que les groupes de cigarettes (31) peuvent être amenés à la tête de contrôle (35) fixe, dans la zone d'un poste de contrôle (59), dans des poches (62) d'un transporteur, en particulier une tourelle révolver (63) ou une chaîne à poches (64).

13. Dispositif selon la revendication 12, caractérisé par le fait que les cigarettes (20) du groupe de cigarettes (31) peuvent, dans la zone du poste de contrôle, être amenés, par un organe de poussée, en particulier par un poussoir (61) étagé, dans une formation à couches (32, 33, 34) étagées les unes par rapport aux autres.

14. Dispositif selon l'une des revendications précédentes, caractérisé par le fait qu'il est prévu des moyens pour arrêter et contrôler les cigarettes sur le transporteur ou pour contrôler en mouvement continu, par alimentation discontinue de l'émetteur.

15. Dispositif selon l'une des revendications précédentes, caractérisé par le fait qu'à chaque couche (32, 33, 34) d'un groupe de cigarettes (31) peut être associé un récepteur (28) ou émetteur (66, 67, 68) à déport latéral correspondant à la position relative des cigarettes dans la couche (32, 33, 34), les cigarettes de chaque couche pouvant être contrôlées, pendant le mouvement relatif par rapport à l'émetteur ou récepteur, par alimentation discontinue de celui-ci.

16. Dispositif selon l'une des revendications précédentes, caractérisé par le fait que les émetteurs de lumière (38, 55, 56, 66-68) et récepteurs (28) sont disposés de façon que la lumière peut pénétrer axialement dans les cigarettes (20).

# FIG. 1

# FIG. 2

FIG.3

0 110 125

2

F I G . 4

F I G . 5

FIG. 6

FIG. 7

4

FIG.8

# FIG. 9

# FIG. 10